# EUROPEAN PATENT APPLICATION

(11) **EP 4 106 128 A1**
(43) Date of publication of application: **21.12.2022**
(21) Application number: 21180221.0
(22) Date of filing: 18.06.2021
(51) Int. Cl.: H02J 3/00, H02J 3/14

(54) **POWER DEMAND PREDICTION METHOD AND SYSTEM**

(71) Applicant: Siemens Energy Global GmbH & Co. KG, 81739 München (DE)
(72) Inventor: Bahilo Rodriguez, Edgar, 603 36 Norrköping (SE)

(57) **Abstract**

The present method refers to a method to predict the power demand of the power generation and distribution network to improve the utilization of power generation devices being available in such network. Furthermore, the present invention refers to the prediction unit utilized in such method. Additionally, the present invention refers to a system utilized to realize such method. Furthermore, the present invention refers to computer program product to execute such method. Additionally, the present invention refers to a use of such method, system or computer program product to improve the power generation and the overall efficiency of corresponding power generation devices as available and such power generation and distribution network.

## Description

The present method refers to a method to predict the power demand of the power generation and distribution network. Furthermore, the present invention refers to the prediction unit utilized in such method. Additionally, the present invention refers to a system utilized to realize such method. Furthermore, the present invention refers to computer program product to execute such method. Additionally, the present invention refers to a use of such method, system or computer program product.

While the generation and distribution of generated electrical energy has been performed over decades not only constant requirements to improve the existing systems but also new challenges require new developments. Modern power generation and distribution networks in small scales like in industrial facilities, industrial areas, countries or even continents are more and more faced with the challenge that it has to be spontaneously reacted to, for example, fluctuations in such network. Such fluctuations on a country and continent scale, for example, result from renewable energies being introduced into the electric grid . For example, fluctuations of the wind force significantly influence the power generated from it and might even spontaneously be completely cut down to 0 from high load in case the wind becomes too strong. In such case the wind turbines need to be shut down completely to prevent damages. On a smaller scale modern power optimization systems suffer from, for example, interactions between the contained systems. Corresponding interaction easily result in cascades of spontaneously dropping or increasing power demand providing instant action to avoid significant damages or shutdowns of the network. For example, in case some systems enter a specific mode of operation triggering further systems to react. For example, some turbine being shut down for emergency reasons resulting in secondary devices like a heating to provide a defined cool down to spontaneously require a significant power input. Such spontaneous changes in the network, however, can easily provide significant problems like the whole system to enter a hibernating mode based on incorrect evaluations of such process as failure or grave damage. Or even the whole system to crash as the potential power provided not meeting the power demand results in a devasting shut down of secondary systems having to shut down typically without the chance to restart such systems in a controlled manner. Therefore, there is a need to gain improved insight and foresight in such systems despite the increasing complexity they provide and especially will provide in the near future.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of demand based optimizing of a power generation in a power generation and distribution network,
wherein the method utilizes at least two time series databases,
wherein the at least two time series databases contain at least an electricity load time series database and a weather forecast time series database,
wherein the at least two time series databases are processed by a processing unit utilizing a neural network,
wherein the neural network is an autoencoder,
wherein the processing unit provides a predicted power demand profile for further processing, to an user interface and/or a power generation control unit.

The term "time series database" refers to a database containing a sequence of discrete time data herein a series of data points is listed or graphed in the time order. Such data is, for example, collected in the power generation sector in a huge amount. Herein, corresponding data is typically collected for each power generation device like a continuous flow engines generating terabyte of data within a very short timeframe. Also, the power generation and distribution network itself generates huge amount of data based on the power generation, power consumption, power transmission, and the like. Herein, modern systems are starting to create an amount of data being difficult to impossible to be handled by a skilled person. Especially, to provide predictions taking into account the current state becomes more and more problematic as processing the growing amount of data becomes almost impossible with classic approaches. Simultaneously, generically applying some machine learning system is highly dangerous, as it was noted that not any machine learning system provides reliable results, while significant failures in such prediction easily results in grave damages based on the actual staking accordingly. Thus, this technical field is subject to the need to provide an improved solution to the existing and growing problems while being required to secure a reliable and stable operation.

Such predicted power demand profile can be beneficially summarized as mere predicted power demand representing an expected power required at a given time. However, for typical applications it can also be beneficial to provide a more detailed profile containing predicted values for specific fetails. Like some specific data regarding the rate of increasing or decreasing the power demand indicating especially whether some spikes or drops are to be expected. Such situations have a significant impact on the power requirements.

An autoencoder is a special type of neural network providing an efficient data coding in an unsupervised manner. Herein, such outer encoder is able to learn a representation for a set of data typically providing the dimensionality reduction by training the neural network to ignore noise. Surprisingly, it was noted that such type of neural network can very beneficially utilized to process corresponding data and to provide such predicted power demand profiles. In more details the compression of the data provided by such autoencoder allows to very easily identify comparable data within time series databases utilized in the power generation field. Apparently, this special type of neural network is especially suited to process the data utilized in this context like electricity load time series databases, a weather forecast time series databases and power demand time series databases. Herein, a surprising highly reliable evaluation is achieved while the required processing power is low enough to effectively implement such method for real systems. The achieved balance renders it possible to significantly improve the possibilities available and render highly sophisticated analysis requiring experts of multiple fields working together

According to a further aspect the present invention refers to a prediction unit to be utilized in an inventive method, wherein the prediction unit contains the processing unit anda data storage containing the neural network being an autoencoder,
wherein the processing unit is adapted to communicate with the at least two time series databases,
wherein the at least two time series databases contain at least an electricity load time series database and a weather forecast time series database.

According to a further aspect the present invention refers to a system containing a prediction unit comprising a processor and a non-transitory computer readable medium comprising computer executable instructions that when executed by the processor cause the system to perform operations comprising: receiving data from at least two time series databases, wherein the at least two time series databases contain at least an electricity load time series database and a weather forecast time series database,
wherein the data retrieved is processed by a neural network,
wherein the neural network is an autoencoder,
wherein a predicted power demand profile is provided as output,
wherein the output is provided for further processing, to an user interface and/or a power generation control unit.

According to further aspect the present invention refers to a computer program product, tangibly embodied in a machine-readable storage medium, including instructions operable to cause a computing entity to execute an inventive method.

According to further aspect the present invention refers to storage device for providing an inventive computer program product, wherein the device stores the computer program product and/or provides the computer program product for further use.

According to further aspect the present invention refers to use of an inventive method, an inventive prediction unit, an inventive system, or an inventive computer program product to provide a predicted power demand profile to improve the utilization of power generation devices like continuous flow engines in a power generation and distribution network.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a scheme of an inventive method generating the predicted power demand profile and utilizing the predicted power demand profile to monitor and control power generation devices.
Fig. 2 shows a scheme of an inventive method generating the predicted power demand profile and utilizing the predicted power demand profile to detect deviations within the power generation and distribution network.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long term data storage like hard drives or data storage units like CDs, DVDs, USB sticks and the like. Such data storage can additionally include or be connected to a processing unit to allow a processing of the data stored on the data storage.

In the following the invention will be exemplarily refer to continuous flow engines like gas turbines. It was noted that the application of the invention in such area was especially beneficial. Corresponding continuous flow engines are, for example, typically utilized as base power providing units in a power generation and distribution network additionally having to handle the fluctuations resulting from the inhomogeneous power generation resulting from renewable energy.

According to one aspect the present invention refers to a method as described above.

Furthermore, it was noted that specific types of autoencoders are especially suitable to be utilized in typical applications. According to further embodiments it is preferred that the autoencoder is the sequential autoencoder. A sequential autoencoder is a modification of the generic outer encoder, wherein the representation of the data is learned by means of their temporal dependency and that previous values. This representation is contained in a high dimensional layer connecting the autoencoder with a decoder.

Autoencoders utilize vectors when processing data, wherein such vectors can be classified as high dimensional vector and low dimensional vector. In this context it was noted that specific vectors are very beneficial for typical applications as specified herein. According to further embodiments it is preferred that a high dimensional vector of the sequential autoencoder is utilized by the processing unit to provide the predicted power demand profile. Surprisingly, it was noted that utilizing a high dimensional vector of the sequential autoencoder typically very effectively makes use of identified relations between electricity load patterns as well as weather conditions. This is especially relevant for power generation units being continuous flow engines like gas turbines, for example, being utilized to balance fluctuations resulting from renewable power production like wind turbines and the like. Herein, the relation resulting from, for example but not limited to, increased demands for power generation of such classical power generation devices in case of changing wind velocities or even complete shutdowns in case the wind velocity goes beyond a certain threshold value surprisingly allows a highly detailed and reliable analysis and prediction utilizing such method.

The electricity load time series database may provide different origins. For example, it can be originating from simulations or historic collections of corresponding data. Herein, it was noted that typically it is preferred to use real measured historic data collected over long time. According to further embodiments it is preferred that the electricity load time series database is a historic electricity load time series database. Naturally, it is possible to enrich the data by further adding a simulated electricity load time series data.

For example, it can also be preferred to utilize adapted historic time series data. For example, it is possible to adapt the corresponding historic data by means of introducing known deviations and calculating the difference accordingly. According to further embodiments it is preferred that the electricity load time series database is a modified historic electricity load time series database. For example, changes of the existing power generation and distribution network like added consumers or reduced losses based on improvements introduced can be utilized to provide a modified historic electricity load time series database to provide an improved data source. Surprisingly, this additional step and effort significantly reduces the later processing. Additionally, especially for short-term decisions it allows to effectively increase the efficiency and reliability of corresponding predictions. Surprisingly, this easily outweighs the effort required by such modification.

In typical application cases the sequential outer encoder is beneficially utilized to search within the existing databases to identify corresponding related data. According to further embodiments it is preferred that the sequential autoencoder is utilized to identify relevant data in the at least two time series databases, wherein preferably a high dimensional vector of the sequential autoencoder is utilized. Surprisingly, it was noted that this allows to easily and reliably identify corresponding reference data to be utilized for the prediction. For example, comparable historic data in a historic electricity load time series database can be efficiently identified that way. Especially, it was noted that a limited processing power it becomes possible to very reliably identify relevant data in a big data source.

A further database that is typically beneficially utilized contains data with regard to the power demand in such power generation and distribution network. According to further embodiments it is preferred that the at least 2 time series databases also contain the power demand time series database. Such power demand time series database contains data with regard to the demand of electrical power over time. For example, power demand time series databases for small scaled applications may contain data what devices are utilized within a limited area like a facility or a town at a given time resulting in the corresponding power demand. For example, power demand time series databases of large-scale applications may contain abstracted indicators of corresponding power demands within the corresponding network like on a country scale or continent scale. Such indicators can be fluctuations resulting from localized significantly increased power consumption to indicate certain areas consuming a significantly increased amount of power. Also, such indicators can be a price paid for corresponding power at a given time indicating indirectly times in which significantly increased demand is confronted with the limited offer resulting in corresponding increases to be paid.

The utilization of the predicted power demand profile can be further optimized by introducing data specific for the corresponding power generation devices. According to further embodiments it is preferred that a control processing unit utilizes the predicted power demand profile based taking into account power generation device characteristics, wherein the power generation device characteristics are retrieved by the control processing unit from a power generation device characteristics database, wherein a suggested control action is provided to an user interface phase and/or a power generation control unit taking into account the power generation device characteristics of a specific power generation device to be controlled.

Such power generation device characteristics database can be localized and or remotely located. Typically, it is preferred that at least a part of the corresponding data of the database is provided as localized database. However, to further increase the benefit it is typically preferred that at least a part of the power generation device characteristics is located on a remote database, more preferred that the power generation device characteristics database is a remote database. Such remote database can, for example, be a distributed database located in a cloud. For example, such remote database can be provided by a manufacturer or service provider of the power generation devices like continuous flow engines being, for example, steam turbines or gas turbines. This allows to continuously update such databases with the most recent experiences and to include adaptions resulting from upgrades and recent service actions very easily based on the centrally collected experience. Especially, such remote databases might also utilize a scheduled maintenance plan to further adapt the optimum usage of the power generation devices. For example, based on an already scheduled maintenance action before the corresponding wearout of the generation device has been reached a more demanding utilization of the power generation device might be suggested. As the increased wear out would not result in a rescheduling or increase costs.

The term "distributed database" as used herein refers to a decentralized database like a blockchain, a distributed ledger, a distributed data storage system, a distributed ledger technology based system, a manipulation proof database, a cloud, a cloud service, a blockchain in a cloud or a peer-to-peer database. Herein, such distributed database can be a public database like a public block chain or a non public database like a private block chain. Typically, it is preferred that such block chain is non public and can only be accessed by authorized persons. Herein, such access right might also be granted for external persons to allow a review of for example the production data of specific products.

Such power generation device characteristics database contains characteristic information of the power generation device being utilized for power generation. For example, such data can be detailed information with regard to the power generation devices being available in the power generation plant. Herein, such characteristic information does not necessarily only refer to technical specifications of the power generation device like a continuous flow engine being, for example, a gas turbine. For example, such characteristic information can also include wear measurements and predictions, maintenance schedules, potential upgrades being available, failure logs of such engine and like. Herein, such information goes beyond the digital twin of the power generation device representing the virtual state like the wear resulting from the utilization of the power generation device constantly wearing out the device and requiring a maintenance action after a while. Typically, it is preferred that such characteristic information of the power generation device also contains options being available like potential rescheduling of maintenance actions, potential upgrades being available, and the like.

Furthermore, it was noted that the present invention can be beneficially utilized to evaluate and optimize the maintenance schedule of corresponding power generation devices. According to further embodiments it is preferred that the method includes utilizing the power generation device characteristics database to retrieve and evaluate a maintenance schedule of at least one power generation device, wherein the predicted power demand profile is utilized to simulate an outcome of a changed generic use of the at least one power generation device, wherein the changed generic use changes the wear of the at least one power generation device, wherein optionally an adapted maintenance schedule is provided if required, wherein the simulated outcome of the changed generic use and optionally the adapted maintenance schedule if required is forwarded to an user interface and/or control unit of a power generation device. It is possible to predict the wear of a power generation device like a gas turbine based on the utilization. However, the significant stress resulting from the constantly changing utilization easily renders correspondingly tailored maintenance schedules unusable. Furthermore, the amount of renewable energy introduced into typical power generation and distribution networks is constantly increasing providing a continuously increasing amount of fluctuations to be compensated. The present invention allows to significantly improve such planning and also flexibly adapt such planning according to new utilization related decisions in this context.

A further option provided by the inventive method is allowing a very reliable yet low processing power requiring analysis to get detailed inside in the outcome of adaptions of single power generation devices within an existing fleet. According to further embodiments it is preferred that the method contains requesting a changed maintenance schedule of a first power generation device, wherein based on at least the predicted power demand profile, a maintenance schedule of at least one second power generation device, and the simulated outcome of a changed generic use resulting from the changed maintenance schedule of the first power generation device, an evaluation of such changed maintenance schedule is provided. Such method allows to provide the possibility for an operator being tasked with optimizing the maintenance schedule of the power generation device like a gas turbine to evaluate whether changing the maintenance schedule and distributing the additionally required power during the downtime of the first power generation device to different power generation devices being required to, for example, operate in an less efficient higher performance mode. This significantly simplifies the operation that allows to significantly reduce the burden on different power generation devices and avoids that based on the unplanned use beyond the typically required performance rescheduling of their maintenance schedule is required. Surprisingly, it was noted that the complex interaction even within a single power plant easily goes beyond what an operator utilizing even decade-long experience can accomplish. Especially, taking into account modern power generation devices being designed to operate at technical limit and provide optimum outcomes with high-efficiency.

An additional important possibility provided by the inventive method is to countercheck measured data to identify deviations within the system. Utizing the predicted power demand profile acquired according to the inventive method it becomes possible to identify, for example, malfunctions at an early stage based on the differences between the predicted and existing profiles. According to further embodiments it is preferred that a safety processing unit retrieves the predicted power demand profile and a measured power demand profile, wherein the safety processing unit evaluates deviations of the measured power demand profile and the corresponding elements of the predicted power demand profile, wherein the deviations are subjected to an error calculation to identify relevant deviations, wherein relevant deviations are provided to an user interface and/or a safety control unit, wherein the safety control unit triggers diagnosis actions to identify an origin of the relevant deviations. The surprising possibility allows to significantly improve the safety as well as utilization of such system. The error calculation can, for example, be some noise based calculation to differentiate noise resulting from measured sensor data from real deviations originating from significant deviations.

In the context of such safety processing unit it is typically surprisingly beneficial to utilize a remote based system. According to further embodiments it is preferred that the safety processing unit is a remote safety processing unit or is connected to the remote database like a remote distributed database. It was noted that such safety evaluation and determination of the origin of corresponding relevant deviations are typically very beneficially supported by an expert having detailed insight in the corresponding power generation devices like continuous flow engines. For example, a gas turbine being a continuous flow engine represents the highly sophisticated technical device requiring very detailed expert knowledge to evaluate corresponding very minor deviations. However, it was surprisingly noted that utilizing such very detailed expert knowledge allows to identify typical problems and malfunctions at an early stage based on the overall profile being able to be associated to the specific problem. While such insight and corresponding relevant data is typically not available at the customer site corresponding providers of corresponding power generation devices are able to utilize data collected over decades and taking into account corresponding changes introduced during updates and overhauls to make best use of such indicator being available by such predicted power demand profile. Herein, corresponding cases not being able to be automatically identified can be easily provided to some expert significantly increasing the reliability of corresponding safety measures.

The inventive method even allows for typical applications to directly adjust the controls of the corresponding power generation devices utilizing the inventive insight. According to further embodiments it is preferred that the method contains automatically adjusting the controls of at least one power generating device, preferably a continuous flow engine like a gas turbine, based on the predicted power demand profile. It was noted that the surprising reliability of the required protection allows to automatically adjust the controls of such engine during normal utilization. Naturally, significant changes of its use might still be counterchecked by an operator, however, it was surprisingly possible to reduce such interactions to a minimum utilizing the invention. Herewith, it becomes possible to significantly increase the speed of response to certain conditions as well as tremendously reduce the effort required by such operator rendering it possible that a plurality of power generating devices can be simultaneously monitored by one or two operators without impairing safety nor functionality.

Additionally, to further adapt the method according to a very specific system was noted to be surprisingly beneficial for such applications to include a feedback loop. According to further embodiments it is preferred that the method contains adjusting the process of the processing unit providing the predicted power demand profile based on the feedback acquired from an operator utilizing the user interface. Further adapting the method to the specific power generating devices and utilization can be easily realized by introducing a feedback loop allowing to introduce the response of an operator into the working routine of the processing unit. Such improved behavior of such feedback loop can also be associated to the specific generic use like a more conservative utilization reducing the wear of the poor generating devices. Or an efficiency oriented generic use intended to improve the overall efficiency and output of the power generating device. Herein, it can be preferred to provide a switching option for the processing unit to be utilized by the operator to switch between such predefined modes being trained over time. In such embodiments the operator can train the processing unit accordingly during known times and simply switch to a different mode thereafter. Surprisingly, this is an efficient method to provide the further adapted system expected to be highly demanded for modern power generating systems. Such system moving further and further away from the classical once defined always utilized use to the more and more developing adaption on demand according to the specific situation. This option to keep the power generation devices easily adaptable to the specific needs in the specific situation is deemed to be a very important feature to be required in the future based on ongoing developments and changes in the power production market.

One type of typical application is applying the inventive method to a low number of power generation plants or even as single power generation plants being typically owned by a single entity. According to further embodiments it is preferred that the power generation and distribution network contains at most four, more preferred at most 3, power plants, even more preferred 1 power plant. A corresponding owner of such power generation and distribution network is enabled by the inventive method to make a significantly improved utilization of the existing power generation devices. Especially, it becomes possible to keep or even increase the reliability while improving the output and possibilities of a highly efficient utilization of corresponding devices.

However, the corresponding method can also be applied on a bigger scale. According to further embodiments it is preferred that the power generation and distribution network contains at least one country or federal state. It was noted that the inventive method allows to, for example, identify a long-term optimize station strategies including, for example, building additional or more decentralized power generation plants at specific locations based on the predictions acquired.

Furthermore, the inventive method can be utilized to optimize the utilization of different power generation devices. According to further embodiments it is preferred that the predicted power demand profile is utilized to optimize the controls of at least two different power generation devices. Such different power generation devices are preferably differentiating by means of their power generation like a steam turbine and gas turbine and/or by means of their power generation. Such different power generation is typically preferred to be at least 10%, more preferred at least 30%, of the maximum power output of the lower output power generation device as specified by its manufacturer under standard condition. Surprisingly, it is possible to identify the optimum action also taking into account the outcome of such action for the different power generation device being typically very difficult to identify based on corresponding differences and the outcome of the interrelated changes. For example, an early shutdown of a first power generation device might require a second power generation device to operate in less beneficial conditions providing an overall detrimental outcome compared to some increased costs for shutting down the first power generation device at a later point.

According to further embodiments it is preferred that the predicted power demand profile is a short term predicted power demand profile. Such short-term predicted power demand profile is typically taking into account the power demand within the time interval being at most the next 24 hours, more preferred at most the next hour, even more preferred at most the next 10 minutes. Utilizing the inventive method for such prediction is especially useful for an operator trying to optimize utilization of his power generation devices on a day by day basis.

According to further embodiments it is preferred that the predicted power demand profile is the midterm predicted power demand profile. Such midterm the department profile is typically taking into account the power demand within a time interval being at least 24 hours, more preferred at least 48 hours. Herein, such midterm predicted power demand profile is preferably located within the next 30 days, more preferred being at most a time interval within the next day and 30 days from now. Corresponding midterm predicted power demand profiles are surprisingly beneficial for managers trying to evaluate whether the existing means can be utilized in a more efficient way. For example, whether the existing fleet of power generation devices can be more efficiently utilized to compensate short-term power demands while increasing the maintenance costs. This is surprisingly beneficial, as the corresponding outcome is very hard to evaluate while the corresponding damages being possible are typically requiring a very conservative utilization of the existing means.

According to further embodiments it is preferred that the predicted power demand profile is a long-term predicted power demand profile. Such long-term predicted power demand profile is typically taking into account the power demand within a time interval being at least 30 days, more preferred at least 90 days, even more preferred at least 365 days. Typically, it is preferred that such long-term predicted power demand profile is provided for a time period being at most 10 years, more preferred at most 5 years, even more preferred at most 3 years. Surprisingly, it was noted that even long-term planning can be beneficially supported by the inventive method. For example, it becomes possible to predict future changes and assess planned actions with regard to their outcome to such power production and distribution network. For example, whether the introduction of new significant power consuming elements like industrial production plants might require simultaneously providing a localized power generation source within the specific part of the network to stabilize the system.

According to a further aspect the present invention refers to a prediction unit to be utilized in an inventive method, wherein the prediction unit contains the processing unit and a data storage containing the neural network being an autoencoder, wherein the processing unit is adapted to communicate with the at least two time series databases, wherein the at least two time series databases contain at least an electricity load time series database and a weather forecast time series database. It was noted that a corresponding prediction unit can be provided as standalone system or already specified to retrieve and exchange data with some remote data source like a distributed database. Furthermore, corresponding assessments and simulations showed that an increasing number of corresponding prediction units in the field allows to further improve the predictions as well as significantly stabilize local power generation and distribution networks. For example, an industrial production area. Also, it allows to secure the power distribution within the complete population at a larger scale like a continent wide power network.

According to a further aspect the present invention refers to a system containing a prediction unit comprising a processor and a non-transitory computer readable medium comprising computer executable instructions that when executed by the processor cause the system to perform operations comprising: receiving data from at least two time series databases,
wherein the at least two time series databases contain at least an electricity load time series database and a weather forecast time series database,
wherein the data retrieved is processed by a neural network, wherein the neural network is an autoencoder,
wherein a predicted power demand profile is provided as output,
wherein the output is provided to an user interface and/or a power generation control unit.

According to further aspect the present invention refers to a computer program product, tangibly embodied in a machine-readable storage medium, including instructions operable to cause a computing entity to execute an inventive method.

According to further aspect the present invention refers to storage device for providing an inventive computer program product, wherein the device stores the computer program product and/or provides the computer program product for further use.

According to further aspect the present invention refers to use of an inventive method, an inventive prediction unit, an inventive system, or an inventive computer program product to provide a predicted power demand profile to improve the utilization of power generation devices like continuous flow engines in a power generation and distribution network.

The following detailed description of the figure uses the figure to discuss illustrative embodiments, which are not to be construed as restrictive, along with the features and further advantages thereof.

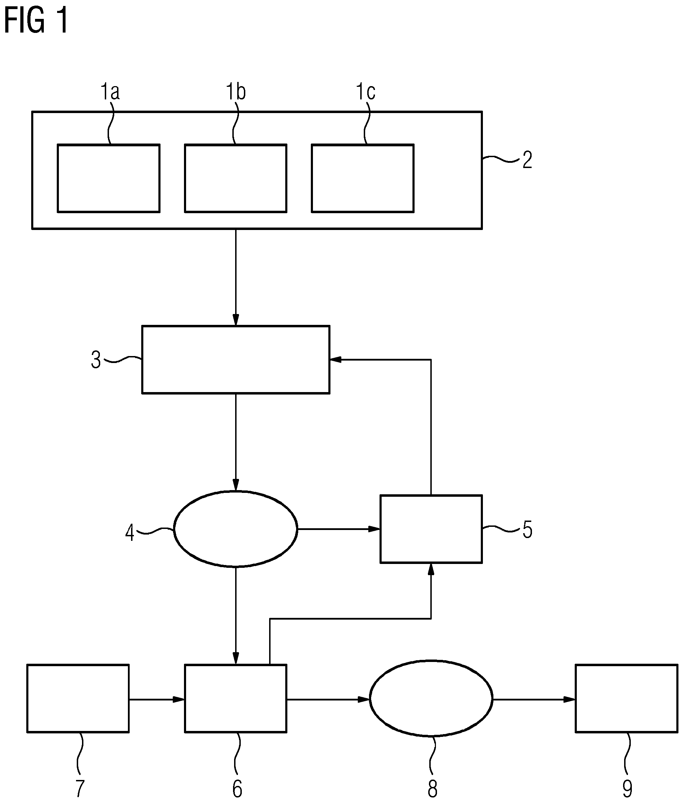

Figure 1 shows a scheme of an inventive method generating the predicted power demand profile and utilizing the predicted power demand profile to monitor and control power generation devices 9. Herein, the figure shows multiple time series databases 2. Shown are three databases, namely a historic electricity load time series database 1a, a weather forecast time series database 1b, and a power demand time series database 1c. Data from the time series databases 2 is retrieved by the prediction unit 3. The prediction unit 3 utilizes a neural network being a sequential autoencoder to predict the power demand profile 4 to be further utilized. Herein, the sequential autoencoder identifies comparable historic data in the historic electricity load time series database. Herein, the high dimensional vector of the sequential autoencoder is utilized to identify comparable data within the database.

Said power demand profile 4 is forwarded to a control processing unit 6 being in charge of controlling a power generation device 9 being a gas turbine. The control processing unit 6 utilizes the predicted power demand profile 4 taking into account gas turbine characteristics, wherein the gas turbine characteristics are retrieved by the control processing unit 6 from a power generation device characteristics database 7, wherein a suggested control action 8 is provided to an user interface 5 and/or a power generation control unit taking into account the power generation device characteristics of the gas turbine device to be controlled. Hereby, the power generation device characteristics are retrieved from a power generation device characteristics database 7.

Additionally to the power generation device characteristics a maintenance schedule is retrieved from the power generation device characteristics database 7. Herein, the maintenance schedule it taken into account to evaluate the outcome of a more generic change of utilization of the power generation device 9. Herein, it is, for example, evaluated whether increased performance resulting in a higher strain of the gas turbine is still within the tolerances or whether an adaption of the maintenance schedule is required. This is especially beneficial to avoid that some short-term optimization of the output results in impacting the overall output based on the downtime resulting from an unexpected and unplanned maintenance action required. For example, it was noted that it can be beneficial to provide an additionally required amount of power by means of a less optimum gas turbine of an available fleet. Herein, things like increased fuel requirements may easily be overshadowed by keeping up a corresponding maintainance schedule. Orto plan downtimes also to meet contractual obligations or secure the safety a power grid without risking too many gas turbines having to shut down at the same time. Furthermore, the inventive methods allow us to automatically adapt an existing maintaining schedule if required. Herein, it is possible to automatically switch slots in downtimes of different gas turbines to allocate corresponding timeslots for maintenance to such more strained power generation device 9. Also, the inventive method allows to automatically adapt such maintainance schedule in case a more straining utilization is enforced by an operator. Such adapted maintenance schedule is forwarded to the user interface 5 as well as the control unit of the gas turbine to inform the operators.

The method as shown in figure 1 herein not only provides the aforementioned facts and simulations, but also an evaluation of such change maintaining schedule to the user interface. The evaluation contains a review based on a predefined parameter being, for example, efficiency based or cost-based. For example, the operator defines said evaluation to take into account the overall efficiency based on the generated power in relation to maintenance costs. It was noted that a plurality of interests can be addressed in this context and the operators can easily define corresponding easy-to-understand parameters. For example, in the aforementioned case some significantly improved strained beyond a certain limit results in a jump of the specified power outputs to cost ratio as the corresponding increase of maintenance and downtimes significantly shift that ratio downwards. Thus, even the simple graphic of an estimated increased wear in correlation to the performance allows to decide on whether intended changes are reasonable or easily result in a major loss. Herein, the costs might not even be the target. The easy to acquire costs can be utilized as an indicator showing when the system is strained beyond a reasonable limit.

Surprisingly, it was noted that such system can be easily implemented in the existing power plant by providing the correspondingly adapted prediction unit 3. Said prediction unit 3 retrieves corresponding data from local time series databases 2 being available or communicates via some network like the Internet with some remote time series databases. Herein, such prediction unit 3 can be provided as standalone systems simply being connected to the existing IT of such power plant continuously retrieving and processing the data automatically and providing the improvement without any further action being required.

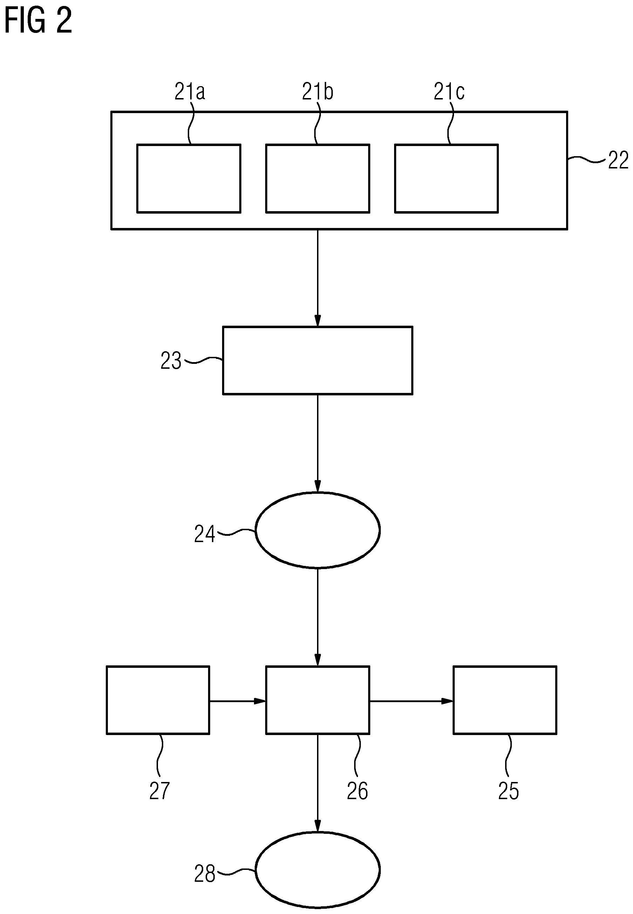

Fig. 2 shows a scheme of an inventive method generating the predicted power demand profile and utilizing the predicted power demand profile to detect deviations within the power generation and distribution network. Comparable to figure 1 three databases are shown. Namely, a historic electricity load time series database 21a, a weather forecast time series database 21b, and a power demand time series database 21c. Data from the time series databases 22 is retrieved by the prediction unit 23. The prediction unit 23 utilizes a neural network being a sequential autoencoder to predict the power demand profile 24 to be further utilized. Herein, the sequential autoencoder identifies comparable historic data in the historic electricity load time series database.

The power demand profile 24 is forwarded to a safety processing unit 26 adapted to monitor and secure the safety of a power grid. Herein, the safety processing unit 26 in addition to the predicted power demand profile 24 utilizes data regarding measured power demands retrieved from a measured power demand profile database. This not only allows to validate the predicted data, but also renders it possible to make better use of the collected data. The predicted power demand profile 24 already providing a very detailed and reliable prediction can further be utilized to identify similar past development of the power demand being not easily simulated. Also, including fatal reactions and interactions of power consumers within a power grid being confronted with, for example, break downs or other problems further destabilizing an already damaged system.

Additionally, such measured power demand profiles and predicted power demand profiles can also be utilized retrospectively to identify deviations between the prediction and the real measured power demands. Surprisingly, it becomes possible to identify specific problems within a power grid that way, wherein this applies to small power grids as well as large power grids. Utilizing some error calculation allows to identify relevant deviations going beyond statistical errors.

Corresponding information can be utilized by a safety control unit automatically triggering diagnosis actions. Herein, it was noted that no single value or measurement has to be utilized, but a generic profile is evaluated. For example, deviations of a gradient of graphical data can be attributed to certain defects and malfunctions being available from historic data collected over the time. For example, even wear of switches and the like can be deduced from changes over time resulting in some very detailed insight being possible to be acquired using the inventive method. Naturally, it is also possible to more generically identify the area of possible problems and defects and a diagnosis action triggered can be to send a maintenance group to the corresponding asset to review it. Thus, the inventive method allows to significantly improve the possibilities to identify safety risks in an early stage and avoid grave problems with minimum effort.

Herein, such system can not only be utilized by the owner of a single or several power plants. It can also be utilized by a government to monitor a plurality of power plants to detect and prevent problems as well as gain insight into the reliability of a power grid. For example, it is expected that a realistic evaluation and planning to further switch from fossil fuel to renewable energies requires to gain more reliable insight into the power grid and its weaknesses. Also, neglecting possible interactions and extreme situations occurring from time to time might otherwise result in losing control in such case and even a complete malfunction of the power grid might be the outcome. The present invention, however, provides a possible solution to such problem, wherein still the possibility is maintained for the separate power plants to act and work independent while the overall safety can still be monitored in a reliable manner from an overall picture. To respond to demands to ensure that no internal information is leaked the prediction units as used herein can be set up to communicate only in a specified manner and only provide enabled data. Herein, this can be easily adapted also in response to legal requirement to swiftly and cost efficiently follow legal regulations.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of demand based optimizing of a power generation in a power generation and distribution network,
wherein the method utilizes at least two time series databases (2, 22),
wherein the at least two time series databases (2, 22) contain at least an electricity load time series database (1a, 21a) and a weather forecast time series database (1b, 21b),
wherein the at least two time series databases (2, 22) are processed by processing unit utilizing a neural network, wherein the neural network is an autoencoder,
wherein the processing unit provides a predicted power demand profile (4, 24) for further processing, to an user interface (5, 25) and/or a power generation control unit.

2. Method according to any of the aforementioned claims, wherein the autoencoder is the sequential autoencoder.

3. Method according to any of the aforementioned claims, wherein a high dimensional vector of the sequential autoencoder is utilized by the processing unit to provide the predicted power demand profile.

4. Method according to any of the aforementioned claims, wherein the electricity load time series database (1a, 21a) is a historic electricity load time series database (1a, 21a) .

5. Method according to claim 4, wherein the sequential autoencoder is utilized to identify relevant data in the at least two time series databases,
wherein preferably a high dimensional vector of the sequential autoencoder is utilized.

6. Method according to any of the aforementioned claims,
wherein the at least 2 time series databases (2, 22) also contain the power demand time series database (1c, 21c).

7. Method according to claim 7,
wherein the method includes utilizing the power generation device characteristics database to retrieve and evaluate maintenance schedule of at least one power generation device (9),
wherein the predicted power demand profile (4, 24) is utilized to simulate an outcome of a changed generic use of the at least one power generation device (9),
wherein the changed generic use changes the wear of the at least one power generation device (9),
wherein optionally an adapted maintenance schedule is provided if required,
wherein the simulated outcome of the changed generic use and optionally the adapted maintenance schedule if required is forwarded to an user interface (5, 25) and/or control unit of a power generation device (9).

8. Method according to claim 8,
wherein the method contains requesting a changed maintenance schedule of a first power generation device (9),
wherein based on at least the predicted power demand profile (4, 24), a maintenance schedule of at least one second power generation device (9), and the simulated outcome of the change generic use resulting from the changed maintenance schedule of the first power generation device (9) an evaluation of such changed maintenance schedule is provided.

9. Method according to any of the aforementioned claims,
wherein a safety processing unit retrieves the predicted power demand profile (4, 24) and a measured power demand profile (27),
wherein the safety processing unit evaluates deviations of the measured power demand profile (27) and the corresponding elements of the predicted power demand profile (4, 24),
wherein the deviations are subjected to an error calculation to identify relevant deviations,
wherein relevant deviations are provided to an user interface (5, 25) and/or a safety control unit (26),
wherein the safety control unit (26) triggers diagnosis actions (28) to identify an origin of the relevant deviations.

10. Method according to claim 10, wherein the safety processing unit is a remote safety processing unit or is connected to the remote database like a remote distributed database.

11. Method according to any of the aforementioned claims, wherein the method contains automatically adjusting the controls of at least one power generating device, preferably our continuous flow engine like a gas turbine, based on the predicted power demand profile (4, 24).

12. Method according to any of the aforementioned claims, wherein the predicted power demand profile (4, 24) is utilized to optimize the controls of at least two different power generation devices (9).

13. Prediction unit (3, 23) to be utilized in a method according to any of claims 1 to 12,
wherein the prediction unit (3, 23) contains a processing unit and a data storage containing the neural network being an autoencoder,
wherein the processing unit is adapted to communicate with the at least two time series databases (2, 22),
wherein the at least two time series databases (2, 22) contain at least an electricity load time series database (1a, 21a) and a weather forecast time series database (1b, 21b).

14. System containing a prediction unit (3, 23) comprising a processor and a non-transitory computer readable medium comprising computer executable instructions that when executed by the processor cause the system to perform operations comprising:
receiving data from at least two time series databases (2, 22),
wherein the at least two time series databases (2, 22) contain at least an electricity load time series database (1a, 21a) and a weather forecast time series database (1b, 21b),
wherein the data retrieved is processed by a neural network,
wherein the neural network is an autoencoder,
wherein a predicted power demand profile (4, 24) is provided as output,
wherein the output is provided to an user interface (5, 25) and/or a power generation control unit.

15. Computer program product, tangibly embodied in a machine-readable storage medium, including instructions operable to cause a computing entity to execute a method according to any of claims 1 to 12.
